# EUROPÄISCHE PATENTSCHRIFT

(11) **EP 0 739 494 B1**
(45) Veröffentlichungstag und Bekanntmachung des Hinweises auf die Patenterteilung: **15.05.2002**
(21) Anmeldenummer: 95939253.1
(22) Anmeldetag: 10.11.1995
(51) Int. Cl.: G02B 7/00

(54) **MECHANISCHES BEFESTIGUNGSSYSTEM FÜR EIN MODULAR GEFASSTES MIKROOPTISCHES ELEMENT**
MECHANICAL FASTENING SYSTEM FOR MODULAR MICROOPTICAL ELEMENTS
SYSTEME DE FIXATION MECANIQUE D'ELEMENTS MICRO-OPTIQUES MODULAIRES

(30) Priorität: 15.11.1994 DE 4440772; 11.09.1995 DE 19533426
(43) Veröffentlichungstag der Anmeldung: 30.10.1996
(73) Patentinhaber: Leica Geosystems AG, 9435 Heerbrugg (CH)
(72) Erfinder: ANDREASCH, Wolfgang, CH-1025 St-Sulpice (CH)
(74) Vertreter: Büchel, Kurt F., Dr.
(86) Internationale Anmeldenummer: EP9504423
(87) Internationale Veröffentlichungsnummer: WO9615467

(56) Entgegenhaltungen:
- EP-A- 0 051 574
- BE-A- 883 589
- US-A- 5 131 611

## Beschreibung

Die Anmeldung betrifft eine Halterung für ein mechanisches Befestigungssystem für Optik-Einzelmodule auf einer Grundplatte zur Herstellung von optischen bzw. optoelektronischen Systemen. Dabei kann es sich um die Anordnung unterschiedlicher optischer Bauteile zu einem ein- bzw. mehrdimensionalen Gesamtsystem handeln.

Für optische Bauteile, wie Linsen, Prismen und Spiegel, sind die unterschiedlichsten Halterungs- bzw. Fassungstechnologien bekannt geworden. Sie reichen vom Aufkleben kleiner Prismen auf Träger, wobei das Prisma bis zum Aushärten des Klebers in justierter Lage gehalten werden muß, bis zu verschiedenen Prismen-"Stühlen" mit oder ohne Klammern bzw. federnde Bügel, vgl. H. Naumann und G. Schröder: "Bauelemente der Optik" 4. Auflage, Karl Hanser Verlag München und Wien, 1983, Seite 272. Aus diesem Stand der Technik geht beispielsweise hervor, daß die Halterung von Optikbauteilen wegen der vielen unterschiedlichen Formen und Funktionen dem einzelnen Bauteil jeweils individuell angepaßt werden muß. Die Druckschriff BE-A-883 589 offenbart eine faltbare Halterung für eine Linse mit Scharnierartigen Beinen.

Die vorliegende Erfindung geht davon aus, daß es für einen modernen, automatisierten Herstellungsprozeß optischer Systeme erforderlich ist, mechanisch standardisierte Bauelemente, in denen jeweils ein optisches - insbesondere mikrooptisches (Lichtstrahldurchmesser: 5 mm) - Einzel-Bauelement gefaßt ist, einzusetzen. Bei den mikrooptischen Elementen kann es sich beispielsweise um Laserdioden, Mikrolinsen, integrierte Optik-Module, Glasfaserbündel, Lichtleitstäbe, diffraktive Elemente, Detektoren, Sensoren, Filter, Spiegel, Blenden usw. handeln.

Mit der zur Verfügungstellung von Standardbauelementen, die beispielsweise innerhalb eines quaderförmigen Gehäuses gefaßt sein können, ist eine erste prinzipielle Vereinfachung beim Handling sowie beim entscheidenden Positionieren und Orientieren dieses Quaders bezüglich einer Grundplatte gegeben.

Es ist die Aufgabe der vorliegenden Erfindung, eine Halterung für ein mechanisches Befestigungssystem für optische Elemente, die jeweils in einem Einzel-Gehäuse gefaßt sind, vorzuschlagen. Weitere Teilaufgaben bestehen darin, Verfahren zur Herstellung derartiger Befestigungselemente sowie Verwendungen derselben anzugeben. Vor der endgültigen Fixierung des in einem Modul gefaßten mikrooptischen Elementes hat dieses - zusammen mit dessen Gehäuse - alle translatorischen und rotatorischen Freiheitsgrade, während nach der Befestigung auf der Grundplatte die Position und die Orientierung des mikrooptischen Elementes permanent gesichert sind (Anzahl der Freiheitsgrade: 0).

Diese technische Aufgabe wird erfindungsgemäß durch die kennzeichnenden Merkmale des Anspruchs 1 gelöst. Weitere vorteilhafte Ausgestaltungen ergeben sich aus den abhängigen Ansprüchen. Beansprucht werden auch Verfahren. zur Herstellung einer Halterung.

Mit Hilfe des erfindungsgemäßen Befestigungssystems gelingt es nunmehr, standardisierte Bauelemente auf einer Grundplatte, beispielsweise unter Zuhilfenahme von Manipulations- und Robotersystemen, in präziser Weise zu befestigen. Dadurch ist die Herstellung von 1- bis 3dimensionalen Layouts möglich. Das Ausrichten und Befestigen der modular konzipierten Standardbauelemente ist in einem Montageschritt möglich, wodurch eine flexible und automatisierte Bestückung unterschiedlicher mikrooptischer Geräte problemlos möglich wird. Mit dem erfindungsgemäßen Befestigungssystem gelingt die Herstellung einer dauerhaften mechanischen Verbindung zwischen dem mikrooptischen Element und der Grundplatte, wobei Position und Orientierung jedes mikrooptischen Elementes relativ zur Grundplatte gesichert sind.

Die Erfindung wird nunmehr anhand der Figuren näher erläutert.

Es zeigen in schematischer Darstellung:
- Fig. 1:: die Zuordnung eines Standardbauelementes über eine erfindungsgemäße "3-Bein"-Halterung zu einer Grundplatte;
- Fig. 2:: geometrische Details der erfindungsgemäßen "3-Bein"-Halterung mit angedeutetem quaderförmigen Standardbauelement;
- Fig. 3:: die Geometrie einer 2dimensionalen Ausgangsstruktur eines erfindungsgemäßen "3-Beins";
- Fig. 4:: ein zweites Ausführungsbeispiel einer Ausgangsstruktur für ein erfindungsgemäßes Befestigungssystem mit "Kugelgelenken";
- Fig. 5:: eine dritte Ausführungsform einer 2dimensionalen Ausgangsstruktur des erfindungsgemäßen Befestigungssystems mit paarweise angeordneten "Kugelgelenken" in Maximaldistanz;
- Fig. 6:: eine vierte Ausführungsform einer 2dimensionalen Ausgangsstruktur des erfindungsgemäßen Befestigungssystems mit paarweise angeordneten "Kugelgelenken" in Minimaldistanz;
- Fig. 7:: eine fünfte Ausführungsform einer 2dimensionalen Ausgangsstruktur des erfindungsgemäßen Befestigungssystems mit einer speziellen Kombination von "Kugelgelenken" und Scharnieren;
- Fig. 8:: eine weitere Ausführungsform mit hohlen, halbkugelförmigen "Kugel-Beinen" mit eingezeichneten Scharnier-Achsen;
- Fig. 9:: die in Fig.8 gezeigte Ausführungsform mit eingezeichnetem Koordinatensystem und verbesserter Darstellung der Kugel-Segment-Geometrien.

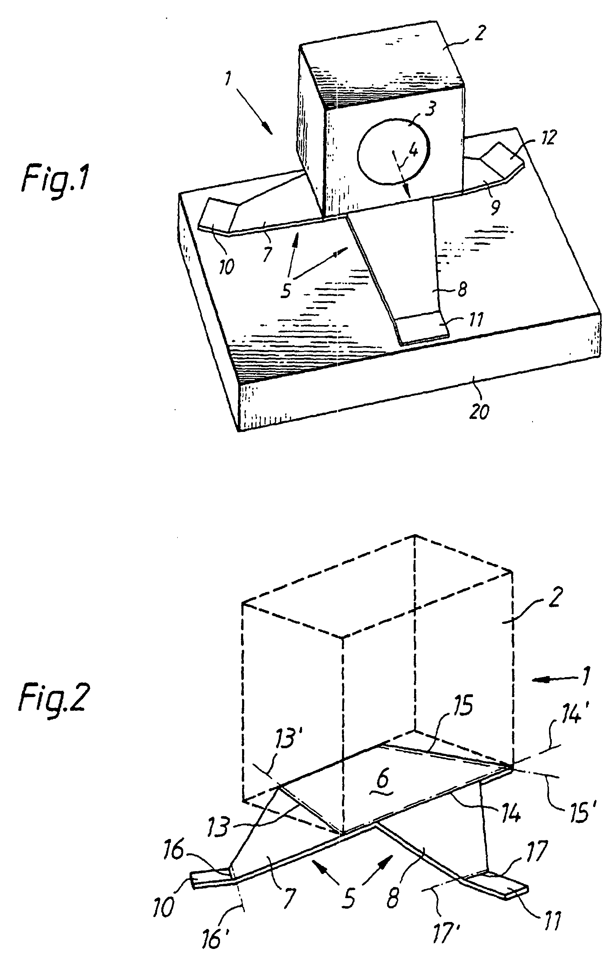

In Fig.1 ist ein als Quader 2 gezeichnetes Standardbauelement 1, in dem ein mikrooptisches Element 3 - im gezeichneten Fall eine Mikrolinse mit einer optischen Achse 4 - enthalten ist, dargestellt. Der Quader 2 ist mit seiner Unterseite auf einer erfindungsgemäßen Halterung befestigt, die im gezeichneten Fall als sogenannte "3-Bein"-Halterung 5 ausgeführt ist. Von einer in Fig. 1 nicht erkennbaren Plattform sind drei Schenkel 7-9 in Richtung zur Grundplatte 20 abgewinkelt, an welche ihrerseits Füße 10-12 angelenkt sind. Die Füße stehen im Kontakt mit der Grundplatte 20. Solange diese Füße nicht mit der Grundplatte 20 fest verbunden sind, kann das Standardbauelement 1 bezüglich aller sechs Freiheitsgrade positioniert bzw. orientiert werden.

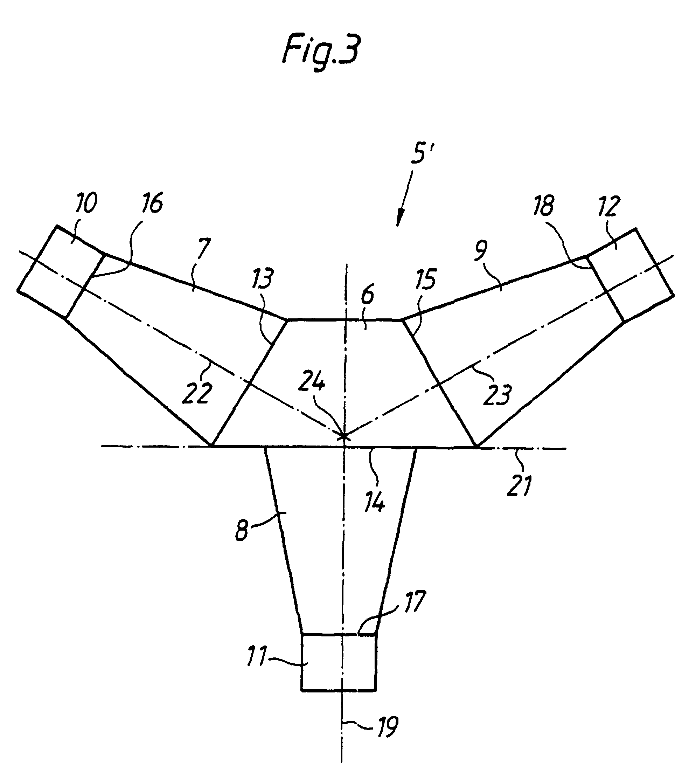

In Fig.2 wird die Geometrie der erfindungsgemäßen Halterung 5 näher erläutert. Man erkennt die Plattform 6, auf der der Quader 2 zeichnerisch angedeutet ist. Die Unterseite des Quaders 2 stimmt nicht überein mit der sich verjüngenden Fläche der Plattform 6; dies ist lediglich im vorderen Bereich - wie dargestellt - der Fall. Mit 13'-15' sind sogenannte Scharnier-Achsen bezeichnet. Sie stellen gewissermaßen die Biegelinien der abzubiegenden Schenkel 7-9 dar. In analoger Weise sind in Fig.2 Scharnierachsen 16' und 17' dargestellt, um die die Füße 10 bzw. 11 nach oben umgebogen bzw. abgewinkelt werden.

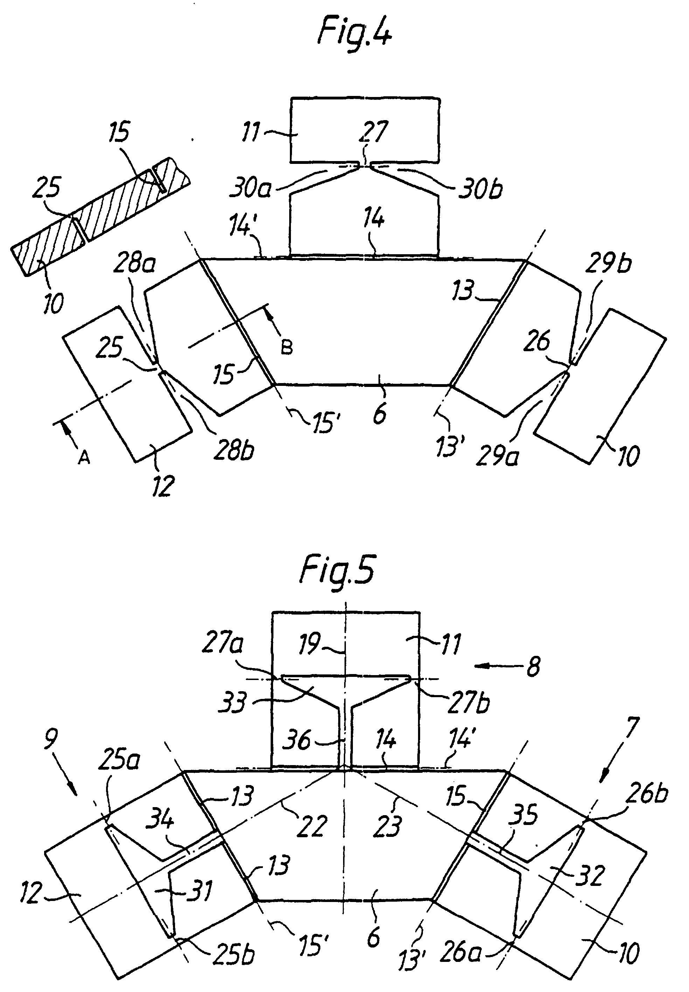

Aus Fig.3 gehen die geometrischen Verhältnisse eines erfindungsgemäßen "3-Bein"-Halterungssystems hervor. Gezeigt wird die 2dimensionale Ausgangsstruktur 5'. Diese Ausgangsstruktur stellt gleichsam ein "Ausschneide"-Muster für ein Ausgangs-Blech dar. Die Plattform 6 ist ein halbiertes regelmäßiges Sechseck, wobei die Halbierung längs derjenigen Verbindungslinie 21 erfolgte, welche zwei diametral gegenüberliegende Ecken eines Hexagons verbindet. Drei sternförmig angeordnete Bereiche ("3 Beine") gehen von der Plattform 6 aus. Sie bestehen jeweils aus einem Schenkel 7,8,9 und einem zugehörigen Fuß 10,11,12. Man erkennt, daß die zu jeweils einem Bein gehörenden Scharniere einander parallel verlaufen. Die Mittelsenkrechten 22 und 23 der Beine 7,10 und 9,12 schneiden sich auf der Spur 19 der Symmetrieebene der "3-Bein"-Halterung 5 bzw. deren 2dimensionaler Ausgangsstruktur 5' in einem Punkt 24. Wäre die Plattform 6 die Hälfte eines regelmäßigen Sechsecks im mathematischen Sinne, so läge der Punkt 24 genau auf der Verbindungslinie 21. Aus Fig.3 sind die prinzipiellen Symmetrieverhältnisse des Befestigungssystems sehr gut erkennbar. Von besonderer Bedeutung ist das Vorhandensein jedenfalls einer Symmetrieebene, vgl. deren Spur 19. In der räumlichen Darstellung von Fig.1 verliefe die nicht mit dargestellte Symmetrieebene in der Weise, daß sie senkrecht auf der Grundplatte 20 steht und die optische Achse 4 enthält. Natürlich handelt es sich bei diesen Betrachtungen um Annäherungswerte, da das erfindungsgemäße Befestigungssystem im fixierten Zustand gewollt deformiert - und zwar nach Maßgabe der vorgenommenen Justier-Korrekturen - sein kann. Dies ändert jedoch nichts an den prinzipiellen Betrachtungen über die Symmetrieverhältnisse.

Aus Fig. 1 in Verbindung mit Fig.3 geht auch deutlich hervor, daß das Gesamtsystem (Standardbauelement 1 und Halterung 5) in Richtung der optischen Achse 4 "stapelbar" ist. Hiermit soll zum Ausdruck gebracht werden, daß mehrere Gesamtsysteme in enger Folge nach Art einer optischen Bank hintereinander auf der Grundplatte 20 befestigt werden können - und zwar im engen Linearabstand zueinander. Durch die geometrische Anordnung der Beine des Befestigungssystems behindern sich die Beine zweier hintereinander entlang der optischen Achse 4 positionierter Halterungen nicht. Natürlich ist es auch möglich, anstelle einer 1dimensionalen Anordnung entlang der optischen Achse 4 nach Art einer optischen Bank eine 2dimensionale Layout-Konfiguration zu realisieren. Dazu bedarf es lediglich des Einsatzes lichtumlenkender Bauelemente (Prismen, Spiegel, Lichtleitstäbe, Faserbündel, integrierte Optiken usw.) als modular gefaßte mikrooptische Elemente.

Natürlich ist es auch denkbar, anstelle einer "3-Bein"-Halterung eine solche mit (3+x) Beinen vorzusehen, wobei gilt: x = 1,2,....n. Läßt man beispielsweise in Fig.3 das Bein 8,11 weg und spiegelt das verbleibende System an der Linie 21, so entsteht eine Ausgangsstruktur mit hexagonaler Plattform und vier Beinen. Verzerrt man beispielsweise die so erhaltene Struktur längs der Achse 19, sodaß die Plattform gewissermaßen rautenförmig deformiert wird, so erhält man wiederum eine andere vierzählige Konfiguration. Auch ist es möglich, die Plattform beispielsweise als Dreieck, Rechteck, Quadrat oder Pentagon auszubilden und mit entsprechend vielen Beinen auszustatten. Von Bedeutung ist in jedem Falle, daß das Befestigungssystem zumindest eine Symmetrieebene aufweist, die senkrecht auf der Grundplatte 20 steht. Dadurch sind gleichartige Verhältnisse hinsichtlich der mechanischen Stabilität und der thermischen Einflüsse gegeben. Um die "Stapelungs"-Fähigkeit solcher erfindungsgemäßen Befestigungssysteme zu erhöhen, die beispielsweise eine pentagonale oder hexagonale Plattform aufweisen, ist es auch möglich, daß zumindest ein Bein fehlt.

In den Figuren 4 bis 7 sind weitere Ausführungsformen der 2dimensionalen Ausgangsstruktur dargestellt. Ihnen allen ist im Vergleich zu der in den Figuren 1 bis 3 erläuterten Ausgangsstruktur gemeinsam, daß sie beim Kippen der Plattform 6 bzw. des Quaders 2 eine bessere Anlagefähigkeit der Füße 10-12 auf der Grundplatte 20 gewährleisten. Dies ist bei einer automatischen Montagetechnologie natürlich von Vorteil. Allgemein gesprochen, werden durch die in den Figuren 4 bis 7 dargestellten Ausführungsbeispiele zusätzliche Freiheitsgrade in die Geometrie der Beine eingeführt.

In Fig.4 befindet sich zwischen dem Schenkelteil und dem Fuß 12 lediglich eine schmale Materialbrücke, die als "Kugelgelenk" 25 mit drei rotativen Freiheitsgraden bezeichnet werden kann. Analoge Betrachtungen gelten selbstverständlich für die beiden anderen Beine. Natürlich handelt es sich bei der dargestellten Form nicht um ein Kugelgelenk im eigentlichen Sinne, denn eine zweistückige Kugel/Pfanne-Kombination ist nicht vorgesehen. Aus diesem Grunde kann diese drei Freiheitsgrade realisierende Ausbildung als "Festkörpergelenk" bezeichnet werden, wodurch verdeutlicht werden soll, daß es aus einem einstückigen Material hergestellt worden ist. Es entsteht bei der Ausführungsform nach Fig.4 dadurch, daß zwei keilförmige Ausschnitte 28a/28b-30a/30b paarweise symmetrisch in jedem Bein ausgeführt werden. Am Beispiel der zu Fig.4 gehörenden Detailzeichnung, die einen Schnitt längs der Linie A-B darstellt, kann die konstruktive Gestaltung des Kugelgelenks 25 bzw. des Schamiers 15 erläutert werden. In die 2dimensionale Ausgangsstruktur, die aus einem einstückigen Material - beispielsweise aus Blech der Stärke: 1 mm - besteht, werden längs der für die Scharniere bzw. Kugelgelenke vorgesehenen Stellen schmale Spalte eingebracht. Dies kann beispielsweise mittels Drahtelektroerosion, Präzisionssägen, Prägen usw. erfolgen. In der Detailskizze erkennt man, daß für die Ausbildung des Schamiers 15 ein schmaler Spalt von der Oberseite nach unten erzeugt wird, sodaß nur noch eine kleine Materialbrücke - gewissermaßen als 1dimensionaler Längs-Steg - verbleibt. Damit ist ein Schamiergelenk realisiert, das einen Freiheitsgrad besitzt. Das "Kugelgelenk" 25 wird in der Weise erzeugt, daß ein Spalt gewissermaßen von der Unterseite der Ausgangsstruktur in den vorher bereits erzeugten schmalen Verbindungssteg zwischen Fuß 12 und Schenkel eingebracht wird. Man erhält dadurch ein Festkörpergelenk mit drei Freiheitsgraden. Der Fuß 12 kann sich in beliebiger Weise den räumlichen Verhältnissen, insbesondere der topographischen Struktur der Grundplatte 20, anpassen. Die Charakteristik eines Scharniergelenkes 15 bzw. eines "Kugelgelenkes" 25 ist schließlich durch die elastische Verformung in den durch die angebrachten Spalte lokal begrenzten Bereichen gegeben. Gleiches gilt für alle anderen dargestellten Scharnier- und "Kugelgelenke".

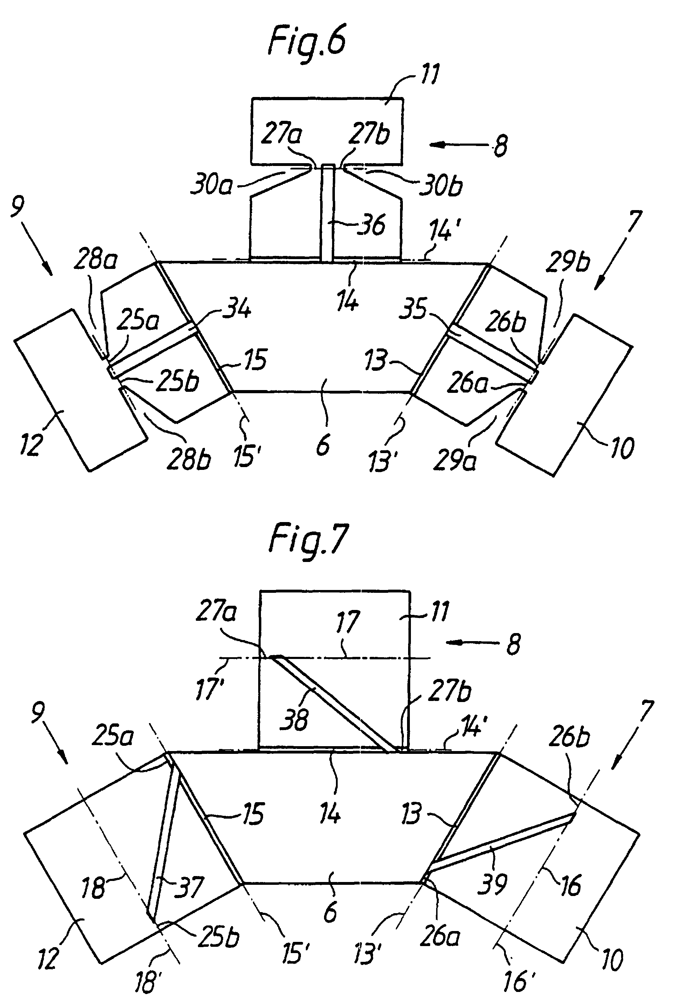

In Fig.5 ist eine "Kugelgelenk-Schamier-Kombination" pro Bein dargestellt. Anstelle nur eines "Kugelgelenkes" pro Bein werden nunmehr jeweils zwei "Kugelgelenke" 25a/25b bzw. 26a/26b bzw. 27a/27b vorgesehen. Gegenüber dem in Fig.4 beschriebenen Ausführungsbeispiel hat die in Fig.5 gezeigte Variante den Vorteil, daß der kleinste Materialquerschnitt in den Festkörper-"Kugelgelenken" je Bein verdoppelt wird. Erzeugt wird diese Konfiguration durch dreiecksförmige Ausnehmungen 31-33 innerhalb der Bein-Regionen und durch zusätzliche Anbringung eines Parallel-Spaltes 34-36 entlang den Mittelsenkrechten 22,23 und 19 in Richtung zur Plattform 6 hin. Diese "Kugelgelenk-Scharnier-Kombinationen" tragen zu einer Erhöhung der mechanischen Stabilität bei. Verringert man je Bein die Distanz zwischen den "Kugelgelenken", so erhält man die in Fig.6 dargestellte Version.

Bei dem in Fig.7 gezeigten fünften erfindungsgemäßen Ausführungsbeipiel wird je Bein ein Scharnier und ein "Kugelgelenk" vertauscht und platzsparend angeordnet. Dies sei am Beispiel des Beines mit dem Schenkel 7 und dem Fuß 10 näher erläutert. Im Bereich des Schenkels 7 verläuft in Diagonalrichtung ein - vorzugsweise paralleler - Spalt 39. Dieser trifft einerseits auf der Scharnier-Achse 13' derart auf, daß er das Gesamt-Scharnier in einen Schamierbereich 13 mit einem Freiheitsgrad und in ein "Kugelgelenk" 26a mit drei Freiheitsgraden unterteilt, und andererseits auf der Scharnier-Achse 18' derart auf, daß er - im entgegengesetzten Sinne - das Scharnier in ein "Kugelgelenk" 26b (drei Freiheitsgrade) und in einen Scharnierbereich 18 (einen Freiheitsgrad) unterteilt. Gleiches gilt für die andern beiden dargestellten Beine. Mit dieser erfindungsgemäßen Ausführungsform ist eine platzsparende Variante erhalten worden, die eine vielfältige Einsatzmöglichkrit gewährleistet.

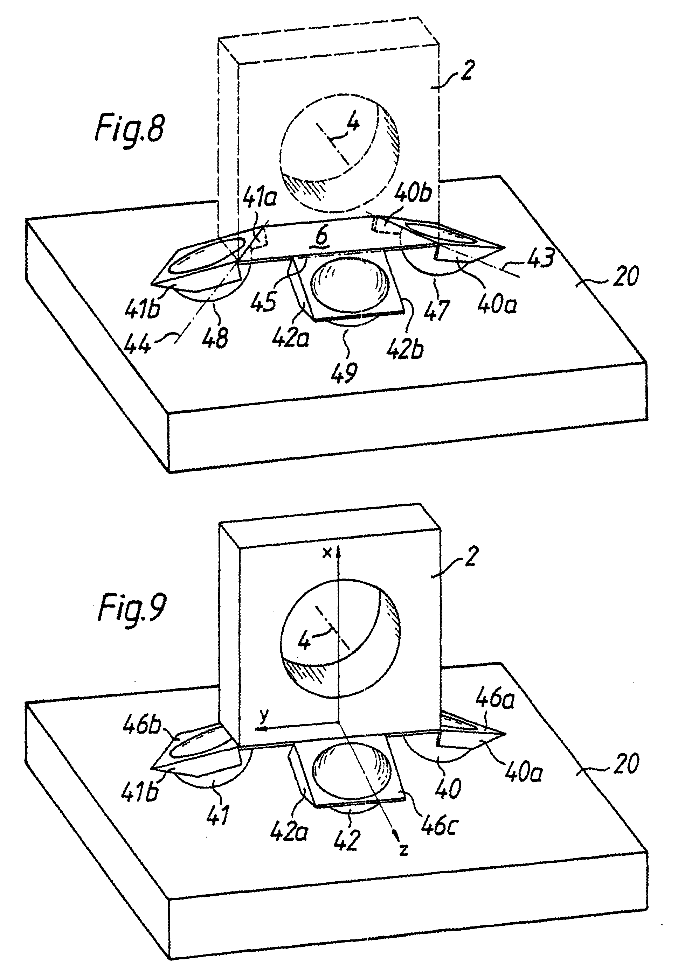

In den Fig.8 und 9 ist ein weiteres erfindungsgemäßes Ausführungsbeispiel dargestellt. Zu erkennen ist wiederum eine Plattform 6 (Fig.8), wie sie in den Fig.2 bis 7 bereits dargestellt wurde. Im Unterschied zu den bislang erörterten Ausführungsbeipielen weist das in den Fig.8 bzw. 9 gezeigte Befestigungssystem keine aus Schenkeln und Füßen bestehenden Beine auf; es handelt sich vielmehr um sogenannte "Kugel-Beine" 47-49. Sie bestehen aus hohlen, halbkugel-förmigen Ausbauchungen nach Art eines Tropenhelms, den sogenannten Kugel-Segmenten 40-42, weiterhin jeweils aus einem ebenen Randbereich 46a-46c nach Art einer Äquatorialebene und schließlich aus seitlichen Versteifungs-Profilpaaren 40a,40b; 41a,41b; 42a,42b nach Art eines umgekrempelten Hutrandes. Diese "Kugel-Beine" 47-49 sind direkt einstückig an der Plattform 6 angewinkelt.

Die Positionen der jeweiligen biegeelastischen Scharniere 43-45 (vgl. Fig.8) bzw. deren Achsen werden durch die Anstoßpunkte der jeweiligen umgebogenen Versteifungs-Pofilpaare 40a,40b; 41a,41b; 42a,42b an die Plattform 6 vorgegeben. Jedes der Scharniere 43-45 läßt sich durch einen annähernd auf eine Gerade lokal begrenzten biegeelastischen Bereich zurückführen. Steifigkeitsfördernd kommt hinzu, daß jede Scharnier-Achse 43-45 sowie jedes der seitlichen Versteifungs-Profilpaare 40a,40b; 41a,41b; 42a,42b tangential zum oberen Rand der Hohlhalbkugeln (Kugel-Segmente 40-42) liegen. Natürlich sind anstelle einer geometrisch exakten Kugel-Form (gemeint ist immer: hohle Halbkugel-Form) auch andere gekrümmte Raumformen denkbar, die eine punktuelle Auflage auf einer Grundplatte 20 realisieren. Solche Raumformen können "deformierte" Kugeln, "Geoide", ein- bzw. mehrachsige Rotationsellipsoide bzw. sogenannte tonnen- oder linsenförmige Hohlkörper-Hälften sein. Aus herstelltechnischen Gründen ist der Halbkugel-Hohlform oder einer Kugelkappen-Hohlform der Vorrang zu geben.

Gemäß dem in Fig.9 eingezeichneten Koordinatensystem kann der Quader 2 vertikal entlang der x-Achse und/oder um die beiden horizontal liegenden Achsen y (senkrecht zur optischen Achse) und z (entlang der optischen Achse) bewegt werden, ohne daß sich die Position der Auflagepunkte auf der Grundplatte 20 signifikant ändert.

Die vorgeschlagene Kugel-Geometrie eignet sich zunächst für alle punktförmigen Fügetechniken (z.B. Punktschweißen, insbesondere Laserpunktschweißen), jedoch sind auch flächige Fügetechniken wie Kleben, Löten, etc. anwendbar. Beim Kleben wirkt der Auflagepunkt wie eine mechanische Referenz, was beim Aushärten des Klebstoffes eine höhere Positionsstabilität garantiert.

Zur Erhöhung der Bein-Steifigkeit kann im vorderen Bereich der Kugel-Segmente 40-42 jeweils ein weiteres abgewinkeltes Versteifungs-Profil vorgesehen werden, das parallel zur jeweiligen Scharnier-Achse 43-45 verläuft.

Eine Alternative dazu ist die kranzförmige Fortführung der seitlichen Versteifungs-Pofilpaare 40a,40b; 41a,41b; 42a,42b um den oberen Rand des jeweiligen Kugel-Segments 40-42 herum.

Durch Eindrücken und Stanzen kann das "Kugel-3-Bein" z.B. in einem Folgeverbundwerkzeug in großen Stückzahlen aus dünnen Metallblechen kostengünstig hergestellt werden.

Überraschenderweise wurde gefunden, daß die in den Fig.8 bzw. 9 dargestellte und beschriebene Form der Beine 47-49 die beste Lösung für die Realisierung einer hohen Steifigkeit darstellt. Ohne Einschränkung der Funktion sind jedoch weitere Varianten für die Formgebung des Bereichs zwischen der sphärischen Auflagefläche und dem jeweiligen Scharnier 43-45 möglich.

Die vorgeschlagene Kugelform stellt eine Annäherung an die geometrisch optimale Flächenform dar, bei der keine Variation des Auflagepunktes auftritt. So liegt die typische Abweichung bei geeignet gewählten Halbkugelradien bei 10 µm.

Zur Herstellung kommen alle um- und urformbaren Materialien (insbesondere Metalle) in Frage, wobei einige Herstellverfahren (z.B. Sintern von Keramik) konstruktive Anpassungen erfordern.

Mathematisch läßt sich nachweisen, daß n Beine (mit n = 3,4,..) im unbefestigten Zustand zu keiner statischen Überbestimmtheit führen. Deshalb ist insbesondere unter Beibehaltung der Forderung nach guter "Stapelbarkeit" auch ein "Kugel-4-Bein" für die vorgesehenen Anwendungen geeignet.

Die geometrischen Abmessungen des dargestellten "Kugel-3-Beins" sind folgende:

| | |
|---|---|
| Trapezwinkel der Plattform (6) | 60° |
| Quader (2) | 10 x 10 x 4 mm³ |
| Länge der Scharniere zwischen (6) und (7-9) bzw. (43-45) | 4,6 mm |
| Höhe der Plattform (6) im angewinkelten Zustand | 2,12 mm |
| Winkel zwischen der Plattform (6) und den Schenkeln (7-9) bzw. den ebenen Randbereichen (46a-46c) | 20° |
| "Kuger"-Durchmesser der Segmente (40-42) | 1,8 - 2,2 mm |

Allen Ausführungsformen ist in vorteilhafter Weise gemeinsam, daß sie spielfreie Bewegungsmöglichkeiten eröffnen, daß eine industrielle Herstellung kostengünstig realisierbar und eine Montage auch unter Einsatz von Robotertechniken möglich ist. Das Herstellen der Ausgangsstrukturen kann beispielsweise durch Laserschneiden oder Stanzen erfolgen. Verwendet man dünne Blechteile, z.B. 0,05 mm dicke Edelstahlbleche, so wird erfindungsgemäß vorgeschlagen, die Schenkel 7-9 anschließend zu armieren bzw. zu versteifen. Dies kann beispielsweise dadurch geschehen, daß entsprechend zugeschnittene dickere Blechteile, beispielsweise mit einer Stärke von 0,5 mm, mittels geeigneter Befestigungsverfahren (Laser-Punktschweißen, Kleben, Aufsprengen) auf den Schenkeln ganzflächig befestigt werden. Altemativ hierzu ist es auch möglich, eine Versteifung der Beine lediglich durch eine geeignete Formgebung, z.B. durch das Erzeugen blechversteifender Profilgeometrien, zu bewerkstelligen. Wie bereits erwähnt, kann die Herstellung der Scharniere bzw. der "Kugelgelenke" durch Anwendung einer material-abtragenden, subtraktiven Technik (Funkenerosion, Präzisionssägen, chemisches Ätzen, lonenätzen, usw.) erfolgen. Natürlich ist es auch möglich, durch Umform-Techniken (Pressen, Stanzen) entsprechende lineare "Knick"-Bereiche zu erzeugen, die als Orte elastischer Verformbarkeit fungieren können.

Die vorliegende Erfindung ist nicht auf die beschriebenen und zeichnerisch dargestellten Ausführungsbeispiele beschränkt. Es ist vielmehr auch möglich, weitere geometrische Formvarianten vorzusehen. Schließlich ist die Anwendung der vorgeschlagenen Befestigungssysteme nicht auf Module beschränkt, die ein mikrooptisches Element 3 enthalten; es ist vielmehr lediglich eine Dimensionierungsfrage, sodaß auch "makro"-optische Elemente, die als Einzelmodul gefaßt sind, in der vorgeschlagenen Technologie ausgerichtet werden können.

Mit den erfindungsgemäßen Befestigungssystemen ist es möglich, optische Bauteile in weiten Temperaturbereichen schock- und vibrationsstabil dauerhaft zu haltern. Als Material für die Herstellung der Ausgangsstruktur 5' kommen neben Edelstahl prinzipiell alle weiteren Werkstoffe in Frage, die entsprechend bearbeitbar sind und außerdem in den Scharnier- bzw. Gelenkbereichen über biegeelastische Eigenschaften dauerhaft verfügen. Als Befestigungstechniken des Quaders auf der Plattform 6 bzw. der Füße 10-12 auf der Grundplatte 20 sind beispielsweise das Laser-Punktschweißen oder auch das Kleben an sich bekannt.

Zusammenfassend lassen sich die Vorteile des erfindungsgemäßen Befestigungssystems wie folgt darstellen:
a) zur Exakt-Positionierung bzw. -Orientierung des gefaßten mikrooptischen Elementes 3 kann dieses unter Ausnutzung von sechs Freiheitsgraden mikromanipuliert werden;
b) zur permanenten Fixierung (Reduzierung der Anzahl der Freiheitsgrade auf Null) des Gesamtsystems sind im Minimalfall lediglich drei Befestigungspunkte erforderlich;
c) die Fixierung kann mittels Laser-Punktschweißens oder Klebens erfolgen;
d) es werden geringe Anforderungen an die Laserstrahlpositionierung gestellt;
e) bei Justierbewegungen entlang der Achsen (x,y,z) bleiben die Auflagepunkte nahezu konstant;
f) aufgrund der konstruktiven Merkmale besteht eine gute Zugänglichkeit für die Befestigungstechnik;
g) die optische Achse 4 kann sich innerhalb eines Einzelmoduls 2 beliebig ausbreiten;
h) eine automatisierungsfreundliche Montagehandhabung ist realisierbar;
i) der geringe Platzbedarf erlaubt eine hohe "Packungsdichte"; die Systeme sind stapelbar in Richtung der optischen Achse 4.

### Bezugaziffern-Liste

- 1: - Standardbauelement
- 2: - Quader (Einzelmodul)
- 3: - mikrooptisches Element
- 4: - optische Achse von (3)
- 5: - "3-Bein"-Halterung für (2)
- 5': - sternförmige, 2dimensionale Ausgangsstruktur von (5)
- 6: - Plattform von (5 bzw. 5')
- 7 - 9: - Schenkel von (5 bzw. 5')
- 10 - 12: - Füße von (5 bzw. 5')
- 13 - 15: - Scharniere zwischen (6) und (7 - 9)
- 13'-15': - Scharnier-Achsen von (13 - 15)
- 16 - 18: - Scharniere zwischen (7 bzw. 8 bzw. 9) und (10 bzw. 11 bzw. 12)
- 16'-18': - Scharnier-Achsen von (16 - 18)
- 19: - (Spur der) Symmetrieebene von (5 bzw. 5')
- 20: - Grundplatte für (1)
- 21: - Verbindungslinie (Schnittlinie) zweier diametral gegenüberliegender Ecken eines (gedachten) Plattform-Hexagons
- 22: - Mittelsenkrechte von (10 und 7)
- 23: - Mittelsenkrechte von (12 und 9)
- 24: - (Schnitt-)Punkt
- 25 -27: - (einstückiges) Kugelgelenk
- 25a/25b - 27a/27b: - (einstückige) Kugelgelenk-Paare
- 28a/28b - 30a/30b: - keilförmige Ausschnitte
- 31 - 33: - dreiecksförmige Ausnehmungen
- 34 - 36: - Parallel-Spalte
- 37 - 39: - diagonale Spalte
- 40 - 42: - Kugel-Segmente
- 43 - 45: - Scharnier(e) bzw. Scharnier-Achse(n)
- 40a, 40b; 41a, 41b; 42a, 42b: - seitliche Versteifungs-Profilpaare
- 46a - 46c: - ebener Randbereich der Kugel-Segmente (40-42)
- 47 - 49: - "Kugel-Bein(e)"
- x,y,z: - Koordinatensystem

## Patentansprüche

1. Halterung (5,5') für ein mechanisches Befestigungssystem als Teil einer optischen bzw. optoelektronischen Anordnung auf einer - vorzugsweise ebenen - Grundplatte (20), wobei die Halterung für die Befestigung wenigstens eines in einem Einzelmodul (2) modular gefassten mikrooptischen Elements (3) auf der Grundplatte geeignet ist, **dadurch gekennzeichnet, dass** zur Realisierung einer positionier- und orientiergenauen Fixierung des Einzelmoduls die Halterung mit einer das Einzelmodul tragenden zentralen Plattform (6) ausgebildet ist, an die über jeweils wenigstens ein Scharnier (13-15,43-45) wenigstens drei Beine (7,10; 8,11; 9, 12; 47-49) angelenkt sind, so dass über diese Scharniere und diese Beine die Positionierung und Orientierung des Einzelmoduls auf der Plattform - vor Befestigung der Beine an der Grundplatte - bezüglich aller sechs Freiheitsgrade gegeben ist, und dass durch die Fixierung der Beine die Zahl der Freiheitsgrade auf Null reduziert wird.

2. Halterung für ein Befestigungssystem nach Anspruch 1, **dadurch gekennzeichnet, daß** an die Plattform (6) über jeweils ein Scharnier (43-45) Beine (47-49) angelenkt sind, die jeweils Kugel-Segmente (40-42) aufweisen derart, daß die Berührungsorte zwischen diesen Kugel-Segmenten (40-42) und der Grundplatte (20) punktförmig sind.

3. Halterung für ein Befestigungssystem nach Anspruch 2, **dadurch gekennzeichnet, daß** die Kugel-Segmente (40-42) jeweils einen ebenen Randbereich (46a-46c) aufweisen.

4. Halterung für ein Befestigungssystem nach den Ansprüchen 2 und 3, **dadurch gekennzeichnet, dass** die als Kugelsegment geformten Beine (47-49) zusätzlich Versteifungs-Profilpaare (40a,40b; 41a,41b; 42a,42b) aufweisen, die bezüglich der Randbereiche (46a-46c) abgewinkelt sind.

5. Halterung für ein Befestigungssystem nach Anspruch 4, **dadurch gekennzeichnet, dass** jedes der Versteifungs-Profilpaare (40a, 40b; 41a, 41 b; 42a, 42b) bis zur Plattform (6) unter Bildung je eines biegeelastischen Scharniers (43-45) verläuft.

6. Halterung für ein Befestigungssystem nach Anspruch 4 oder 5, **dadurch gekennzeichnet, daß** zusätzlich je ein Versteifungs-Profil parallel zur jeweiligen Scharnier-Achse (43-45) an demjenigen Teil des Randbereichs (46a-46c) der Kugel-Segmente (40-42) angewinkelt ist, der von der Plattform (6) wegweist.

7. Halterung für ein Befestigungssystem nach Anspruch 6, **dadurch gekennzeichnet, daß** das zusätzliche Versteifungs-Profil als kranzförmige Fortführung der seitlichen Versteifungs-Profilpaare (40a,40b; 41a,41b; 42a,42b) um den oberen Rand des jeweiligen Kugel-Segments (40-42) ausgebildet ist.

8. Halterung für ein Befestigungssystem nach einem der Ansprüche 4 bis 7, **dadurch gekennzeichnet, daß** die Scharnier-Achsen (43-45) und Versteifungs-Profilpaare (40a,40b; 41a,41b; 42a,42b) tangential zum oberen Rand der jeweiligen Kugel-Segmente (40-42) verlaufen.

9. Halterung für ein Befestigungssystem nach einem der Ansprüche 2 bis 8, **dadurch gekennzeichnet, daß** die Kugel-Segmente (40-42) aus Halbkugel-Schalen bestehen.

10. Halterung für ein Befestigungssystem nach einem der Ansprüche 2 bis 8, **dadurch gekennzeichnet, dass** die Kugel-Segmente (40-42) anstelle einer exaktgeometrischen Hohlhalbkugel-Form eine halbkugelähnliche Form, beispielsweise eine "deformierte" Halbkugel-Form oder eine ein- oder mehrachsige Rotationsellipsoid-Halbform, aufweisen.

11. Halterung für ein Befestigungssystem nach Anspruch 1, **dadurch gekennzeichnet, daß** an die zentrale Plattform (6) der Halterung (5) über jeweils mindestens ein Scharnier (13-15) drei aus je einem Schenkel (7-9) und je einem Fuß (10-12) bestehende Beine angelenkt sind, wobei die Plattform und Schenkel verbindenden Scharniere (13-15) und die Schenkel und Fuss verbindenden Scharniere (16-18) jeweils durch zwei parallel verlaufende biegeelastische Zonen flexibel ausgeführt werden, so dass eine Bewegung um die parallel verlaufenden Achsen dieser Zonen möglich ist.

12. Halterung für ein Befestigungssystem nach einem der vorhergehenden Ansprüche, **dadurch gekennzeichnet, dass** die Geometrie der Plattform (6) der Hälfte eines - im wesentlichen - regelmässigen Hexagons entspricht, welche durch einen Schnitt entlang der Verbindungslinie (21) zweier diametral gegenüberliegender Ecken erhalten wurde.

13. Halterung für ein Befestigungssystem nach Anspruch 11 oder 12, **dadurch gekennzeichnet, daß** die Halterung (5) aus einer 2-dimensionalen sternförmigen Ausgangs-Struktur (5') ableitbar ist und eine Symmetrieebene (19) aufweist, deren Spur die Plattform (6) sowie den Schenkel (8) jeweils in zwei trapezförmige Teilbereiche unterteilt.

14. Halterung für ein Befestigungssystem nach einem der vorhergehenden Ansprüche 11-13, **dadurch gekennzeichnet, daß** ein Schenkel (8) mit seiner Mittelsenkrechten in der Symmetrieebene (19) des Systems und die zwei anderen Schenkel (7 bzw. 9) mit ihren Mittelsenkrechten (22 bzw. 23) symmetrisch unter einem Winkel zur Symmetrieebene (19) orientiert sind.

15. Halterung für ein Befestigungssystem nach einem der vorhergehenden Ansprüche 11-14, **dadurch gekennzeichnet, daß** die Schenkel (7-9) einerseits und die Füße (10-12) andererseits jeweils geometrisch identisch sind.

16. Halterung für ein Befestigungssystem nach einem der Ansprüche 11-15, **dadurch gekennzeichnet, daß** sich die Schenkel (7-9) - ausgehend von ihren jeweiligen Scharnieren (13-15) an der Plattform (6) - in Richtung zu ihren jeweiligen Füßen (10-12) nach Art eines gleichschenkligen Dreiecks bis zum Erreichen ihrer jeweiligen Schenkel und Fuss verbindenden Scharniere (16-18) stetig verjüngen und daß die jeweiligen Füße (10-12) rechteckig ausgebildet sind.

17. Halterung für ein Befestigungssystem nach einem der vorhergehenden Ansprüche 11-16, **dadurch gekennzeichnet, daß** eine sternförmige Ausgangs-Struktur (5') derart ausgebildet ist, daß sich die Verlängerungen der Mittelsenkrechten (22 bzw. 23) der Schenkel (7bzw. 9) auf der Spur der Symmetrieebene (19) in einem Punkt (24) innerhalb der Plattform (6) schneiden.

18. Halterung für ein Befestigungssystem nach einem der vorhergehenden Ansprüche 14-17 **dadurch gekennzeichnet, daß** die Plattform (6) entlang der Verbindungslinie (21) zum in der Symmetrieebene liegenden Bein (8) zwischen 7-12 mm, die Plattform und Schenkel verbindenden Scharniere (13-15) zwischen 4-7mm, die Schenkel und Fuss verbindenden Scharniere (16-18) zwischen 2-3,5 mm, - die Länge der Füße (10-12) zwischen 1,5-2,5 mm und der Winkel zwischen den Mittelsenkrechten (22) und (23) der ausserhalb der Symmetrieebene (19) liegenden Schenkel (7 bzw. 9) und der Symmetrieebene (19) 60° beträgt.

19. Halterung für ein Befestigungssystem nach einem der vorhergehenden Ansprüche 11-18, **dadurch gekennzeichnet, daß** jeweils anstelle des einen Freiheitsgrades zwischen dem Fuß (10 bzw. 11 bzw.12) und dem Schenkel (7 bzw. 8 bzw. 9) realisierenden Scharniers (16 bzw. 17 bzw. 18) eine drei Freiheitsgrade realisierende Biegevorrichtung (25 bzw. 26 bzw. 27) vorgesehen ist.

20. Halterung für ein Befestigungssystem nach Anspruch 19, **dadurch gekennzeichnet, daß** die Biegevorrichtungen (25-27) jeweils im Bereich der Mittelsenkrechten (22 bzw.23 bzw.19) der Schenkel (7 bzw. 9bzw. 8) angeordnet sind.

21. Halterung für ein Befestigungssystern nach einem der Ansprüche 19 bis 20, **dadurch gekennzeichnet, daß** der an das jeweilige, Plattform und Schenkel verbindende Scharnier (13 bzw. 14 bzw. 15) angelenkte Teilbereich der Schenkel rechteckförmig ausgebildet ist, dem sich sodann in Richtung zur jeweiligen Biegevorrichtung (25 bzw. 26 bzw. 27) eine dachförmige Verjüngungszone unter Bildung jeweils zweier symmetrischer keilförmiger Ausschnitte (28a,28b bzw. 29a,29b bzw. 30a,30b) anschließt.

22. Halterung für ein Befestigungssystem nach einem der Ansprüche 19 bis 21, **dadurch gekennzeichnet, daß** jeweils zwischen dem Fuß (10 bzw. 11 bzw. 12) und dem zugehörigen Schenkel (7 bzw. 8 bzw. 9) ein aus zwei Biegevorrichtungen bestehendes Biegevorrichtungs-Paar (25a/25b bzw. 26a/26b bzw. 27a/27b) vorgesehen ist.

23. Halterung für ein Befestigungssystem nach einem der Ansprüche 19-22, **dadurch gekennzeichnet, daß** die Biegevorrichtungen (25a -27b) als deformierbare Materialbereiche ausgebildet sind.

24. Halterung für ein Befestigungssystem nach Anspruch 22 und 23, **dadurch gekennzeichnet, daß** die zu jeweils einem Biegevorrichtungs-Paar (25a/25b bzw. 26a/26b bzw. 27a/27b) gehörenden Biegevorrichtungen in Maximaldistanz, d.h. in grösstmöglichem Abstand von der Mittelsenkrechten, voneinander unter Bildung einer flachen, dreiecksförmigen Ausnehmung (31 bzw. 33 bzw. 32) an dem jeweiligen Schenkel (7 bzw. 8 bzw. 9) angeordnet sind und zusätzlich zwischen jeder dreiecksförmigen Ausnehmung (31-33) und dem an der Plattform (6) jeweils vorhandenen zugeordneten Scharnier (13 bzw. 15 bzw. 14) entlang den jeweiligen Mittelsenkrechten (22 bzw. 19 bzw. 23) jeweils ein Parallel-Spalt (34 bzw. 36 bzw, 35) vorgesehen ist .

25. Halterung für ein Befestigungssystem nach Anspruch 22, **dadurch gekennzeichnet, dass** die zu jeweils einem Biegevorrichtungs-Paar (24a/25b bzw. 26a/26b bzw. 27a/27b) gehörenden Biegevorrichtungen in Minimaldistanz, d.h. in geringstmöglichen Abstand von der Mittelsenkrechten, voneinander unter Bildung jeweils zweier keilförmiger Ausschnitte (28a/28b bzw. 29a/29b bzw. 30a/30b) an dem jeweiligen Schenkel (7 bzw. 9 bzw. 8) angeordnet und zusätzlich entlang den jeweiligen Mittelsenkrechten (22 bzw. 19 bzw. 23) ein Parallel-Spalt (34 bzw. 36 bzw. 35) vorgesehen ist.

26. Halterung für ein Befestigungssystem nach einem der Ansprüche 11 bis 18, **dadurch gekennzeichnet, daß** jeder Schenkel (7 bzw. 8 bzw. 9) einen von der Verbindung Plattform-Schenkel (13 bzw. 14 bzw. 15) zur Verbindung Schenkel-Fuss (16 bzw. 17 bzw. 18) diagonal verlaufenden Doppelspalt (37 bzw. 38 bzw. 39) aufweist derart, daß auf jeder der Verbindungs-Achsen (13'-18') die Bildung eines Scharniers (13-15, 16-18) neben einer Biegevorrichtung (25a-27a,25b-27b) realisiert ist .

27. Halterung für ein Befestigungssystem nach Anspruch 26, **dadurch gekennzeichnet, daß** die Scharniere (13-18) und die Biegevorrichtungen (25a-27a, 25b-27b) als deformierbare Materialbereiche ausgebildet sind.

28. Befestigungssystem mit einer Mehrzahl von Halterungen nach einem der vorhergehenden Ansprüche, **dadurch gekennzeichnet, daß** mindestens 2 Halterungen - vorzugsweise in Richtung der optischen Achse (4) des mikrooptischen Elements (3) - auf der Grundplatte mit überschneidender Grundfläche der Halterungen aneinander reihbar sind.

29. Verfahren zur Herstellung einer Halterung für ein Befestigungssystem nach den Ansprüchen 1 bis 10 **gekennzeichnet durch**
a) das Herstellen einer einstückigen, sternförmigen, 2-dimensionalen Ausgangs-Struktur (5' ) aus einem plattenförmigen Material **durch** Stanzen,
b) das gleichzeitige oder anschließende Ausformen von hohlhalbkugelförmigen Segmenten (40-42) **durch** Pressen,
c) das gleichzeitige oder anschließende Umbiegen seitlicher Versteifungs-Profilpaare (40a,40b; 41a,41b; 42a,42b) und
d) das gleichzeitige oder anschließende Anwinkeln von als Kugelsegment geformten Beinen (47-49) in Richtung der Ausformung.

30. Verfahren zur Herstellung einer Halterung für ein Befestigungssystem nach den Ansprüchen 11 bis 27, **gekennzeichnet durch**
a) das Herstellen einer einstückigen, sternförmigen, 2-dimensionalen Ausgangs-Struktur (5') aus einem hochelastischen ptattenförmigen Material -beispielsweise Edelstahlblech -,
b) das anschließende Armieren der Schenkel (7-9) **durch** Aufbringen entsprechend konturierter Verstärkungs-Plättchen derart, daß diskrete Biegelinien entlang der Achsen (13'-18') der Plattform und Schenkel bzw. Schenkel und Fuss verbindenden Scharniere resultieren,
c) das gleichgerichtete Umbiegen der Schenkel (7-9) und
d) das Umbiegen der Füße (10-12) in entgegengesetzter Richtung.

31. Verfahren nach Anspruch 30, **dadurch gekennzeichnet, daß** das Armieren der Schenkel (7-9) durch Anbringen blechversteifender Profilgeometrien erfolgt.

32. Verfahren nach Anspruch 30 oder 31, **dadurch gekennzeichnet, daß** zwischen den Verfahrensschritten b) und c) die Fixierung eines das modular gefasste mikrooptische Element (3) enthaltenden quaderförmigen Einzelmoduls (2) auf der Plattform (6) erfolgt.

33. Verfahren nach Anspruch 30, **dadurch gekennzeichnet, daß** die Herstellung der einstückigen Ausgangs-Struktur (5') mittels Laserstrahlschneidens oder Stanzens erfolgt.

34. Verfahren nach Anspruch 30 oder 32, **dadurch gekennzeichnet, daß** die Fixierung der Verstärkungs-Plättchen bzw. des Quaders mittels Laserstrahl-Punktschweißens, Aufsprengens bzw. Klebens erfolgt.

35. Verfahren zur Herstellung einer Halterung für ein Befestigungselement nach einem der Ansprüche 29 oder 30, **dadurch gekennzeichnet, daß** diskrete Biegelinien entlang der Achsen (13'-18', 43-45) durch Umformen eines monolithischen, plattenförmigen Ausgangsmaterials erzeugt werden.

36. Verfahren zur Herstellung einer Halterung eines Befestigungssystems nach einem der Ansprüche 29 oder 30, **dadurch gekennzeichnet, daß** die Herstellung der Scharniere (13-18, 43-45) durch Anwendung einer subtraktiven, materialabtragenden Technik - beispielsweise durch Funkenerosion, Präzisionssägen oder durch chemisches Ätzen oder durch lonenätzen einer dickeren, monolithischen Blechplatte - erfolgt.

37. Verwendung eines Befestigungssystems nach Anspruch 28 mit mindestens 2 Halterungen für die Herstellung einer positionier- und orientiergenauen mechanischen Verbindung zwischen quaderförmigen Einzelmodulen (2), in welchen jeweils ein mikrooptisches Element (3) gefasst ist, und einer Grundplatte (20).

38. Verwendung nach Anspruch 37, **dadurch gekennzeichnet, daß** die Fixierung von Füßen (10-12) bzw. als Kugelsegment geformten Beinen (47-49) auf der Grundplatte (20) mittels Laserstrahl-Punktschweißens oder Lötens unter temporärer Mitbenutzung eines vorzugsweise automatisch gesteuerten Manipulator/Roboter-Systems erfolgt.

## Claims

1. Holder (5, 5') for a mechanical fastening system as part of an optical or optoelectronic arrangement on a - preferably flat - baseplate (20), the holder being suitable for fastening at least one microoptical element (3), held in a modular manner in an individual module (2), on the baseplate, **characterized in that**, for fixing of the individual module with accurate positioning and orientation, the holder is formed with a central platform (6) which supports the individual module and to which at least three legs (7, 10; 8, 11; 9, 12; 47-49) are linked via in each case at least one hinge (13-15, 43-45), so that, by means of these hinges and these legs, the positioning and orientation of the individual module on the platform - before fastening of the legs to the baseplate - is possible with respect to all six degrees of freedom, and that the number of degrees of freedom is reduced to zero by fixing the legs.

2. Holder for a fastening system according to Claim 1, **characterized in that** legs (47-49) which in each case have spherical segments (40-42) so that the contact locations between these spherical segments (40-42) and the baseplate (20) are point-like are linked to the platform (6) by a hinge (43-45) in each case.

3. Holder for a fastening system according to Claim 2, **characterized by** spherical segments (40-42) each having a planar edge region (46a-46c).

4. Holder for a fastening system according to Claims 2 and 3, **characterized in that** the legs (47-49) shaped as a spherical segment additionally have pairs (40a, 40b; 41a, 41b; 42a, 42b) of stiffening profiles which are angled relative to the edge regions (46a-46c).

5. Holder for a fastening system according to Claim 4, **characterized in that** each of the pairs (40a, 40b; 41a, 41b; 42a, 42b) of stiffening profiles runs to the platform (6) with the formation in each case of a flexible hinge (43-45).

6. Holder for a fastening system according to Claim 4 or 5, **characterized in that** additionally one stiffening profile each is angled, parallel to the respective hinge axis (43-45), at that part of the edge region (46a-46c) of the spherical segments (40-42) which runs away from the platform (6).

7. Holder for a fastening system according to Claim 6, **characterized in that** the additional stiffening profile is in the form of a ring-like, continuation of the lateral pairs (40a, 41b; 41a, 41b; 42a, 42b) of stiffening profiles around the upper edge of the respective spherical segment (40-42).

8. Holder for a fastening system according to any of Claims 4 to 7, **characterized in that** the hinge axes (43-45) and pairs (40a, 41b; 41a, 41b; 42a, 42b) of stiffening profiles are tangential to the upper edge of the respective spherical segments (40-42).

9. Holder for a fastening system according to any of Claims 2 to 8, **characterized in that** the spherical segments (40-42) consist of hemispherical shells.

10. Holder for a fastening system according to any of Claims 2 to 8, **characterized in that** the spherical segments (40-42) have a hemisphere-like shape, for example a "deformed" hemisphere shape or a monoaxial or multiaxial half rotational ellipsoid shape instead of an exact geometrical hollow hemisphere shape.

11. Holder for a fastening system according to Claim 1, **characterized in that** three legs consisting of one limb (7-9) each and one foot (10-12) each are linked to the central platform (6) of the holder (5) by in each case at least one hinge (13-15), the hinges (13-15) connecting platform and limb and the hinges (16-18) connecting limb and foot each being made flexible by means of two parallel flexible zones so that movement about the parallel axes of these zones is possible.

12. Holder for a fastening system according to any of the preceding Claims, **characterized in that** the geometry of the platform (6) corresponds to half a - substantially - regular hexagon, which would be obtained by a cut along the line (21) connecting two diametrically opposite corners.

13. Holder for a fastening system according to Claim 11 or 12, **characterized in that** the holder (5) can be derived from a two-dimensional star-shaped initial structure (5') and has a plane (19) of symmetry, the trace of which divides the platform (6) and the limb (8) in each case into two trapezoidal segments.

14. Holder for a fastening system according to any of the preceding Claims 11-13, **characterized in that** one limb (8) is oriented with its median perpendiculars in the plane (19) of symmetry of the system and the other two limbs (7 and 9) are arranged with their median perpendiculars (22 and 23) symmetrically at an angle to the plane (19) of symmetry.

15. Holder for a fastening system according to any of the preceding Claims 11-14, **characterized in that** the limbs (7-9) on the one hand and the feet (10-12) on the other hand are geometrically identical in each case.

16. Holder for a fastening system according to any of Claims 11-15, **characterized in that** the limbs (7-9) - starting from their respective hinges (13-15) at the platform (6) - taper steadily towards their respective feet (10-12) in the manner of an equilateral triangle until they reach the respective hinges (16-18) linking limb and foot, and that the respective feet (10-12) are rectangular.

17. Holder for a fastening system according to any of the preceding Claims 11-16, **characterized in that** a star-like initial structure (5') is formed in such a way that the extensions of the median perpendiculars (22 and 23) of the limbs (7 and 9, respectively) intersect on the trace of the plane (19) of symmetry, at a point (24) inside the platform (6).

18. Holder for a fastening system according to any of the preceding Claims 14-17, **characterized in that** the platform (6) is between 7 and 12 mm along the connecting line (21) to the leg (8) lying in the plane of symmetry, the hinges (13-15) connecting platform and limb are between 4 and 7 mm, the hinges (16-18) connecting limb and foot are between 2 and 3.5 mm, the length of the feet (10-12) is between 1.5 and 2.5 mm and the angle between the median perpendiculars (22) and (23) of the limbs (7 and 9, respectively) lying outside the plane (19) of symmetry and the plane (19) of symmetry is 60°.

19. Holder for a fastening system according to any of the preceding Claims 11-18, **characterized in that** in each case a bending device (25 or 26 or 27) realizing three degrees of freedom is provided instead of the hinge (16 or 17 or 18) realizing one degree of freedom between the foot (10 or 11 or 12, respectively) and the limb (7 or 8 or 9, respectively).

20. Holder for a fastening system according to Claim 19, **characterized in that** the bending devices (25-27) are arranged in each case in the region of the median perpendiculars (22 or 23 or 19) of the limbs (7 or 9 or 8, respectively).

21. Holder for a fastening system according to either of Claims 19 or 20, **characterized in that** that segment of the limbs which is linked to the respective hinge (13 or 14 or 15) connecting platform and limb is rectangular and is adjacent, in the direction of the respective bending device (25 or 26 or 27), to a roof-shaped tapering zone with formation in each case of two symmetrical wedge-shaped sections (28a, 28b or 29a, 29b or 30a, 30b, respectively).

22. Holder for a fastening system according to any of Claims 19 to 21, **characterized in that** in each case a pair (25a/25b or 26a/26b or 27a/27b) of bending devices which consists of two bending devices is provided between the foot (10 or 11 or 12, respectively) and the associated limb (7 or 8 or 9, respectively).

23. Holder for a fastening system according to any of Claims 19-22, **characterized in that** the bending devices (25a-27b) are in the form of deformable material regions.

24. Holder for a fastening system according to Claims 22 and 23, **characterized in that** the bending devices belonging in each case to a pair (25a/25b or 26a/26b or 27a/27b) of bending devices are arranged with a maximum distance, i.e. with the greatest possible spacing of the median perpendiculars, from one another, with formation of a flat, triangular recess (31 or 33 or 32, respectively) in the respective limb (7 or 8 or 9, respectively) and in addition a parallel gap (34 or 36 or 35, respectively) is provided in each case between each triangular recess (31-33) and the coordinated hinge (13 or 15 or 14, respectively) present in each case at the platform (6), along the respective median perpendiculars (22 or 19 or 23, respectively).

25. Holder for a fastening system according to Claim 22, **characterized in that** the bending devices belonging in each case to a pair (25a/25b or 26a/26b or 27a/27b) of bending devices are arranged with minimum distance, i.e. with the smallest possible spacing of the median perpendiculars from one another with formation in each case of two wedge-shaped sections (28a/28b or 29a/29b or 30a/30b, respectively) at the respective limb (7 or 9 or 8, respectively) and in addition a parallel gap (34 or 36 or 35, respectively) is provided along the respective median perpendiculars 22 or 19 or 23, respectively).

26. Holder for a fastening system according to any of Claims 11 to 18, **characterized in that** each limb (7 or 8 or 9) has a double gap (37 or 38 or 39, respectively) running diagonally from the platform-limb connection (13 or 14 or 15, respectively) to the limb-foot connection (16 or 17 or 18, respectively) in such a way that, on each of the connection axes (13'-18') the formation of a hinge (13-15, 16-18) is realized adjacent to a bending device (25a-27a, 25b-27b).

27. Holder for a fastening system according to Claim 26, **characterized in that** the hinges (13-18) and the bending devices (25a-27a, 25b-27b) are in the form of deformable material regions.

28. Fastening system comprising a plurality of holders according to any of the preceding Claims, **characterized in that** at least two holders can be arranged in series - preferably in the direction of the optical axis (4) of the microoptical element (3) - on the baseplate with overlapping base area of the holders.

29. Method for the production of a holder for a fastening system according to any of Claims 1 to 10, **characterized by**
a) the production of a one-piece, star-like, two-dimensional initial structure (5') from a plate-like material by punching,
b) the simultaneous or subsequent shaping of hollow hemispherical segments (40-42) by pressing,
c) the simultaneous or subsequent bending over of lateral pairs (40a, 40b; 41a, 41b; 42a, 42b) of stiffening profiles and
d) the simultaneous or subsequent angling of legs (47-49), shaped as a spherical segment, in the direction of the shaping.

30. Method for the production of a holder for a fastening system according to any of Claims 11 to 27, **characterized by**
a) the production of a one-piece, star-shaped, two-dimensional initial structure (5') from a highly elastic plate-like material, for example stainless steel sheet,
b) the subsequent reinforcing of the limbs (7-9) by application of correspondingly contoured small reinforcing plates in such a way that discrete bending lines result along the axes (13'-18') of the hinges connecting platform and limb or limb and foot,
c) the subsequent bending over of the limbs (7-9) and
d) the bending over of the feet (10-12) in the opposite direction.

31. Method according to Claim 30, **characterized in that** the reinforcing of the limbs (7-9) is effected by applying sheet metal-stiffening profile geometries.

32. Method according to Claim 30 or 31, **characterized in that** the fixing of a cuboid individual module (2) containing the modular microoptical element (3) on the platform (6) is effected between the steps b) and c) of the method.

33. Method according to Claim 30, **characterized in that** the production of the one-piece initial structure (5') is effected by means of cutting with a laser beam or punching.

34. Method according to Claim 30 or 32, **characterized in that** the fixing of the small reinforcing plates or of the cuboid is effected by means of laser spot welding, snapping on or adhesive bonding.

35. Method for the production of a holder for a fastening element according to either of Claims 29 and 30, **characterized in that** discrete bending lines are produced along the axes (13'-18', 40-45) by shaping a monolithic, plate-like starting material.

36. Method for the production of a holder for a fastening element according to either of Claims 29 and 30, **characterized in that** the production of the hinges (13-18, 42-45) is effected by using a subtractive, material-removing technique - for example by spark erosion, by precision sawing or by chemical etching or by ion etching of a thicker, monolithic metal plate.

37. Use of a fastening system according to Claim 28, comprising at least two holders for the production of a mechanical connection, accurate with respect to positioning and orientation, between cuboid individual modules (2), in each of which a microoptical element (3) is held, and a baseplate (20).

38. Use according to Claim 37, **characterized in that** the fixing of feet (10-12) or legs (47-49) shaped into a spherical segment on the baseplate (20) is effected by means of laser spot welding or soldering with temporary concomitant use of a preferably automatically controlled manipulator/robot system.

## Revendications

1. Agencement de fixation (5,5') pour un système de fixation mécanique, à titre de partie d'un agencement optique ou optoélectronique sur une plaque de base (20) - de préférence plane -, l'agencement de fixation convenant pour la fixation sur la plaque de base d'au moins un élément (3) micro-optique, enchâssé de façon modulaire dans un module individuel (2), caractérisé ce que, pour réaliser une fixation, précise en positionnement et en orientation, du module individuel, l'agencement de fixation est réalisé avec une plate-forme (6) centrale portant le module individuel, plate-forme sur laquelle sont articulées au moins trois pattes (7,10 ; 8,11; 9,12; 47 à 49) par l'intermédiaire, chaque fois d'au moins une charnière, (13 à 15, 43 à 45), de manière que, par l'intermédiaire de ces charnières et de ces pattes, le positionnement et l'orientation du module individuel sur la plate-forme soient fournis - avant la fixation des pattes sur la plaque de base - par rapport à la totalité des 6 degrés de liberté, et en ce que le nombre des degrés de liberté est réduit à zéro par le biais de la fixation des pattes.

2. Agencement de fixation pour un système de fixation selon la revendication 1, **caractérisé en ce que**, sur la plate-forme (6), chaque fois par l'intermédiaire d'une charnière (43 à 45), sont articulées des pattes (47 à 49), présentant chacune des segments de sphère (40 à 42), de manière que les sites de contact, entre ces segments de sphère (40 à 42) et la plaque de base (20), soient de forme ponctuelle.

3. Agencement de fixation pour un système de fixation selon la revendication 2, **caractérisé en ce que** les segments de sphère (40 à 42) présentent chacun une zone de bordure (46a à 46c) plane.

4. Agencement de fixation pour un système de fixation selon les revendications 2 et 3, **caractérisé en ce que** les pattes (47 à 49) conformées en segments de sphère présentent, en plus des paires de profilés de rigidification (40a; 40b ; 41a, 41b ; 42a, 42b); repliées par rapport aux zones de bordure (46a à 46c).

5. Agencement de fixation pour un système de fixation selon la revendication 4, **caractérisé en ce que** chacune des paires de profilés de rigidification (40a, 40b ; 41a, 40b ; 42a, 42b) s'étend jusqu'à la plate-forme (6), en formant à chaque fois une charnière (43 à 45) offrant une élasticité en flexion.

6. Agencement de fixation pour un système de fixation selon la revendication 4 ou 5 **caractérisé en ce que**, en plus, chaque fois un profilé de rigidification est replié, parallèlement à l'axe de charnière (43 à 45) respectif, sur la partie de la zone de bordure (46a à 46c) des segments de sphère (40 à 42) qui s'écartent de la plate-forme (6).

7. Agencement de fixation pour un système de fixation selon la revendication 6 **caractérisé en ce que** le profil de rigidification supplémentaire est réalisé sous la forme de continuation en forme de couronne des paires de profilés de rigidification latéraux (40a, 40b ; 41a, 41b ; 42a, 42b) autour du bord supérieur du segment de sphère (40 à 42) respectif.

8. Agencement de fixation pour un système de fixation selon l'une des revendications 4 et 7 **caractérisé en ce que** les axes de charnière (43 et 45), et les paires de profilés de rigidification (40a; 40b ; 41a ; 41b ; 42a, 42b) s'étendent tangentiellement par rapport au bord supérieur des segments de sphère (40 à 42) respectifs.

9. Agencement de fixation pour un système de fixation selon l'une des revendications 2 à 8 **caractérisé en ce que** les segments de sphère (40 à 42) sont constitués de coquilles hémisphériques.

10. Agencement de fixation pour un système de fixation selon l'une des revendications 2 à 8 **caractérisé en ce que** les segments de sphère (40 à 42) présentent, au lieu d'une forme hémisphérique creuse à géométrie exacte, une forme analogue à une hémisphère, par exemple une forme hémisphérique "déformée", ou bien une forme en demi-ellipsoïde de rotation, à un ou plusieurs axes.

11. Agencement de fixation pour un système de fixation selon la revendication 1 **caractérisé en ce que**, à la plate-forme (6) centrale de l'agencement de fixation (5), par l'intermédiaire chaque fois d'au moins une charnière (13 à 15), sont articulées trois pattes formées chacune d'une branche (7 à 9) et chacune d'un pied (10 à 12), des charnière (13 à 15), reliant la plate-forme et les branches, et des charnières (16 à 18) reliant les branches et le pied, étant chacones réalisées de façon flexible par deux zones s'étendant parallèlement et offrant une élasticité en flexion, de sorte qu'un déplacement autour des axes, s'étendant parallèlement, de ces zones est possible.

12. Agencement de fixation pour un système de fixation selon l'une des revendications précédentes **caractérisé en ce que** la géométrie de la plate-forme (6) correspond à la moitié d'un hexagone - pratiquement - régulier, géométrie ayant été obtenue par une coupe, effectuée le long de la ligne de liaison (21), entre deux angles diamétralement opposés.

13. Agencement de fixation pour un système de fixation selon la revendication 11 ou la revendication 12, **caractérisé en ce que** l'agencement de fixation (5) peut être dérivé d'une structure initiale (5') en forme d'étoile bi-dimensionnelle, et présente un plan de symétrie (19), dont la trace subdivise la plate-forme (6), ainsi que la branche (8), chaque fois en deux zones partielles à forme trapézoïdale.

14. Agencement de fixation pour un système de fixation selon l'une des revendications 11 à 13 précédentes, **caractérisé en ce qu'**une branche (8), avec sa verticale au centre, est orientée dans le plan de symétrie (19) du système et les deux autres branches (7 ou 9), avec leur axe au centre (22 ou 23), sont orientées symétriquement, sous un angle par rapport au plan de symétrie (19).

15. Agencement de fixation pour un système de fixation selon l'une des revendications 11 et 14 précédentes, **caractérisé en ce que** les branches (7 à 9), d'une part, et les pieds (10 à 12), d'autre part, sont chacun géométriquement identiques.

16. Agencement de fixation pour un système de fixation selon l'une des revendications 11 à 15, **caractérisé en ce que** les branches (7 à 9) - en partant de leurs charnières (13 à 15) respectives sur la plate-forme (6) - vont en s'effilant constamment en allant en direction de leurs pieds (10 à 12) respectifs, à la façon d'un triangle isocèle, jusqu'à atteindre des charnières (16 à 18) reliant leurs branches et pied respectifs, et **en ce que** les pieds (10 à 12) respectifs sont rectangulaires.

17. Agencement de fixation pour un système de fixation selon l'une des revendications 11 à 16 précédentes, **caractérisé en ce qu'**une structure initiale (5') en forme d'étoile est configurée de manière que les prolongements des verticales au centre (22 ou 23) des branches (7 ou 9) se coupent sur la trace du plan de symétrie (19), en un point (24) situé à l'intérieur de la plate-forme (6).

18. Agencement de fixation pour un système de fixation selon l'une des revendications 14 à 17 précédentes, **caractérisé en ce que** la plate-forme (6), le long de la ligne de liaison (21) allant à la patte (8) placée dans le plan de symétrie, est d'une longueur comprise entre 7 et 12 millimètres, les charnières (13 à 15), reliant la plate-forme et les branches, sont d'une longueur comprise entre 4 et 7 millimètres, les charnières (16 à 18), reliant les branches et le pied, sont d'une longueur comprise entre 4 et 7 millimètres, les charnières (16 et 18), reliant les branches et le pied, sont d'une longueur comprise entre 2 et 3,5 millimètres - la longueur des pieds (10 à 12) est comprise entre 1,5 et 2,5 millimètres, et l'angle, entre les verticales au centre (22 et 23) des branches (7 ou 9) placées à l'extérieur du plan de symétrie (19) et le plan de symétrie (19), est de 60 degrés.

19. Agencement de fixation pour un système de fixation selon l'une des revendication 11 à 18 précédentes, **caractérisé en ce que**, chaque fois, au lieu d'une charnière (16, 17 ou 18) fournissant un degré de liberté entre le pied (10 ou 11 ou 12) et la branche (7 ou 8 ou 9), est prévu un dispositif à flexion (25 ou 26 ou 27) fournissant trois degrés de liberté.

20. Agencement de fixation pour un système de fixation selon la revendication 19, **caractérisé en ce que** les dispositifs à flexion (25 à 27) sont chacun disposés dans la zone des droites au centre (22 ou 23 ou 19) des branches (7 ou 9 ou 8).

21. Agencement de fixation pour un système de fixation selon l'une des revendications 19 à 20, **caractérisé en ce que** la zone partielle des branches, articulée à la charnière (13, 14 ou 15) respective, reliant la plate-forme et les branches, est de configuration rectangulaire, à laquelle se raccorde ensuite, dans la direction du dispositif à flexion (25, 26, ou 27) respectif, une zone d'effilement en forme de toit, avec formation chaque fois de deux découpures (28a, 28b, ou 29a, 29b, ou 30a, 30b) cunéiformes symétriques.

22. Agencement de fixation pour un système de fixation selon l'une des revendications 19 à 21, **caractérisé en ce que** chaque fois, entre le pied (10, 11 ou 12) et la branche (7, 8 ou 9) afférente, est prévue une paire de dispositifs à flexion (25a/25b, ou 26a/26b, ou 27a/27b) constituée de deux dispositifs à flexion.

23. Agencement de fixation pour un système de fixation selon l'une des revendications 19 à 22, **caractérisé en ce que** les dispositifs à flexion (25a à 27b) sont réalisés sous la forme de zones de matériau déformables.

24. Agencement de fixation pour un système de fixation selon les revendications 22 et 23, **caractérisé en ce que** les dispositifs à flexion, appartenant chacun à une paire de dispositifs à flexion (25a/25b, ou 26a/26b, ou 27a/27b), sont disposés les uns par rapport aux autres sur la branche (7, 8, ou 9) respective, à une distance maximale, c'est-à-dire sous l'espacement le plus grand possible vis-à-vis des verticales au centre, en formant un évidement (31 ou 32 ou 33) rectangulaire plat et, en plus, entre chaque évidement (31 à 33) à forme triangulaire et la charnière (13, ou 15, ou 14) associée, chaque fois présente sur la plate-forme (6), est chaque fois prévu, le long de la verticale au centre (22 ou 19 ou 23) respective, un intervalle (34 ou 36 ou 35) à bords parallèles.

25. Agencement de fixation pour un système de fixation selon la revendication 22, **caractérisé en ce que** les dispositifs à flexion, appartenant chacun à une paire de dispositifs à flexion (24a/25b, ou 26a/26b, ou 27a/27b), sont prévus à une distance les uns des autres minimale, c'est-à-dire à une distance aussi faible que possible de la verticale au centre, en formant chaque fois deux découpures (28a/28b ou 29a/29b ou 30a/30b) cunéiformes sur la branche (7, ou 9, ou 8) respective, et un intervalle (34 ou 36 ou 35) à bords parallèles est en plus prévu le long des verticales au centre (22 ou 19 ou 23) respectives.

26. Agencement de fixation pour un système de fixation selon l'une des revendications 11 à 18, **caractérisé en ce que** chaque branche (7, ou 8, ou 9) présente un double intervalle (37 ou 38 ou 39), s'étendant en diagonale, allant de la liaison plate-forme-branche (13 ou 14 ou 15) à la liaison branche-pied (16 ou 17 ou 18), de manière que, sur chacun des axes de liaison (13' à 18'), la formation d'une charnière (13 à 15, 16 à 18) soit réalisée à côté d'un disposition à flexion (25a à 27a, 25b à 27b).

27. Agencement de fixation pour un système de fixation selon la revendication 26, **caractérisé en ce que** les charnières (13 à 18) et les dispositifs à flexion (25a à 27a, 25b à 27b) sont réalisés sous la forme de zones de matériau déformables.

28. Agencement de fixation avec une pluralité de fixations selon l'une des revendications précédentes, **caractérisé en ce qu'**au moins 2 agencements de fixation peuvent être alignés les uns les autres sur la plaque de base - de préférence dans la direction de l'axe optique (4) de l'élément (3) micro-optique -, la face de base des agencements de fixation étant en coÏncidence.

29. Procédé de fabrication d'un agencement de fixation pour un système de fixation selon les revendications 1 à 10, **caractérisé par**
a) la fabrication d'une structure initiale (5') bi-dimensionnelle, en forme d'étoile, d'une seule pièce, en un matériau en forme de plaque, par un processus d'estampage,
b) le façonnage, simultané ou subséquent, de segments (40 à 42) a une forme hémisphérique creuse, par pressage-emboutissage,
c) le rabattement, simultané ou subséquent, de paires de profilés de rigidification latéraux (40a, 40b; 41a, 41b; 42a, 42b),
d) le repli, simultané ou subséquent, de pattes (47 à 49) en forme de segments de sphère, dans la direction du relief.

30. Procédé de fabrication d'un agencement de fixation pour un système de fixation selon les revendications 1 à 27, **caractérisé par** :
a) la fabrication d'une structure initiale (5') bi-dimensionnelle, en forme d'étoile, d'une seule pièce, à partir d'un matériau en forme de plaque fortement élastique - par exemple une tôle d'acier spécial -
b) l'armature subséquente des branches (7 à 9), par application de plaquettes de renforcement à contour correspondant, de manière que des lignes de flexion discrètes soient produites le long des axes (13' à 18') des charnières reliant la plate-forme et les branches, ou les branches et le pied,
c) le repli, dans le même sens, des branches (7 à 9), et
d) le repli, en sens inverse, des pieds (10 à 12).

31. Procédé selon la revendication 30 **caractérisé en ce que** l'armature des branches (7 à 9) se fait par application de géométries de profil à effet de rigidification de la tôle.

32. Procédé selon la revendication 30 et 31 **caractérisé en ce que**, entre les étapes de procédé b) et c), est effectuée la fixation sur la plate-forme (6) d'un module individuel à forme carrée, contenant un élément (3) micro-optique, enchâssé de façon modulaire.

33. Procédé selon la revendication 30, **caractérisé en ce que** la fabrication de la structure initiale (5') d'une seule pièce se fait par un découpage au rayon laser ou par un estampage.

34. Procédé selon la revendication 30 et 32, **caractérisé par** ce que la fixation des plaquettes de renforcement ou du carré s'effectue par un soudage par points, au rayon laser, par un processus d'éclatement ou par collage.

35. Procédé de fabrication d'un agencement de fixation pour un élément de fixation selon l'une des revendications 29 et 30, **caractérisé en ce que**, des lignes à flexion discrètes sont générées le long des axes (13' à 18', 43 à 45) par un reformage d'un matériau initial en forme de plaque, monolithique.

36. Procédé de fabrication d'un agencement de fixation d'un système selon l'une des revendications 29 et 30, **caractérisé en ce que** la fabrication des charnières (13 à 18, 43 à 45) s'effectue par application d'une technique soustractive, procédant par enlèvement de matière - par exemple par électroérosion, sciage de précision, ou par attaque chimique ou par attaque ionique, d'une plaque de tôle plus épaisse, monolithique

37. Utilisation d'un agencement de fixation selon la revendication 28, avec au moins 2 dispositifs de fixation pour la fabrication d'une liaison mécanique à positionnement et orientation précis, entre des modules individuels (2) à forme carrée, dans chacun desquels est enchâssé un élément (3) micro-optique, et une plaque de base (20).

38. Utilisation selon la revendication 37, **caractérisé en ce que** la fixation de pieds (10 à 12), ou de pattes (47 à 49) formées en segments de sphère sur la plaque de base (20), s'effectue par un soudage par points au rayon laser, ou par brasage, avec utilisation conjointe temporaire d'un système manipulateur/robot, de préférence à commande automatique.
